# EUROPEAN PATENT APPLICATION

(11) **EP 4 822 781 A1**
(43) Date of publication of application: **14.10.2026**
(21) Application number: 24900670.1
(22) Date of filing: 05.12.2024
(51) Int. Cl.: H01M 4/525, H01M 4/36, H01M 4/131, H01M 4/505, H01M 10/052, H01M 10/0562, H01M 10/0566

(54) **POSITIVE ELECTRODE ACTIVE MATERIAL COATING MATERIAL AND SECONDARY BATTERY PROVIDED WITH SAME**

(30) Priority: 08.12.2023 JP 2023207479
(71) Applicant: Stella Chemifa Corporation, Osaka-shi, Osaka 541-0044 (JP)
(72) Inventor: HARIKI, Ryotaro, Sakai-shi, Osaka 590-0982 (JP); NAITOH, Takuma, Sakai-shi, Osaka 590-0982 (JP); MINE, Natsuki, Sakai-shi, Osaka 590-0982 (JP); SAKAGUCHI, Toshitaka, Sakai-shi, Osaka 590-0982 (JP); KON, Sojiro, Sakai-shi, Osaka 590-0982 (JP); TOMISAKI, Megumi, Sakai-shi, Osaka 590-0982 (JP); HASEBE, Rui, Sakai-shi, Osaka 590-0982 (JP); NISHIDA, Tetsuo, Sakai-shi, Osaka 590-0982 (JP)
(74) Representative: Vossius & Partner Patentanwälte Rechtsanwälte mbB
(86) International application number: PCT/JP2024/043063
(87) International publication number: WO 2025/121377

(57) **Abstract**

Provided are a positive electrode active material coating material characterized by containing a compound composed of at least any one or more elements of an alkali metal, an alkaline-earth metal and Al, and F as Component (A), and containing any one or more compounds represented by Chemical Formula (1) and/or Chemical Formula (2) as Component (B), a positive electrode coated with the coating material, and a secondary battery provided with the positive electrode. The positive electrode active material coating material according to the present embodiments can be suitably used in the secondary battery.

## Description

### TECHNICAL FIELD

The present invention relates to a positive electrode active material coating material and a secondary battery provided with the same.

### BACKGROUND ART

A lithium-ion secondary battery using a non-aqueous electrolyte solution has become widespread as a power supply of a portable information device such as a laptop computer, a digital camera, a mobile phone, a smart phone, and a tablet. Recently, a lithium-ion secondary battery has been mounted on an electric vehicle (xEV) as a key device for intending to realize carbon neutrality. In addition, since its application has been spread to a stationary storage battery for a power storage system such as a household power supply or a mega-solar power generation, development of a non-aqueous electrolyte solution-based lithium-ion secondary battery having higher energy density has been advanced.

In a non-aqueous electrolyte solution-based lithium-ion secondary battery, dissolution of a transition metal in a positive electrode active material is caused at an interface between a positive electrode active material and an electrolyte solution, and an electrolyte solution is disadvantageously degraded during charging, thereby disadvantageously causing degradation of battery performances such as decrease of discharge capacity and increase of internal resistance. An approach for increasing a charging potential or adopting a positive electrode material having even a slightly higher operation potential has been tried to enhance energy density of a battery, while this technical field faces problems of how to suppress the degradation of battery performances at the same time.

Conventionally, an approach has been tried to form a stable membrane called SEI (SEI: Solid Electrolyte Interphase) with lithium ion conductivity but without electron conductivity by adding additives to a non-aqueous electrolyte solution to prevent dissolution of a transition metal or degradation of an electrolyte solution during charging. Patent Publication 1 discloses a technique for forming SEI on a positive electrode surface to suppress the dissolution of a metal element in a positive electrode by adding lithium sulfonate containing alkylamine in a molecular scaffold. Patent Publication 2 discloses a technique for suppressing degradation of an electrolyte solution by containing many polyanionic compounds having high thermostability on a surface of a positive electrode composite material layer. However, the correspondence to a battery having higher operation potential is limited even using these techniques.

The technique for forming SEI on a positive electrode by adding additives to a non-aqueous electrolyte solution of Patent Publication 1 needs to further enhance the performances of the non-aqueous electrolyte solution-based lithium-ion battery, while the effects are not univocally obtained from additives in an electrolyte solution, so that there are many problems which should be studied regarding stabilizing performances such as tuning a forming condition in a process of producing a battery, in the point of how to form a stable SEI.

For example, forming a SEI using a non-aqueous electrolyte solution will decompose a non-aqueous electrolyte solution at the time of first charging. At that time, a gaseous component such as hydrogen, carbon dioxide and methane generates as a by-product. Since the gaseous component has a risk of inhibiting lithium ion conduction at an electrode-electrolyte solution interface to elevate internal resistance, a step of removing the gaseous component is required after the first charging.

In addition, when non-aqueous electrolyte solution is decomposed, since the composition of an electrolyte or a solvent contained in a non-aqueous electrolyte solution is likely to change, there is a risk of decreasing ion conductivity depending on the change of lithium ion concentration or change of viscosity of the non-aqueous electrolyte solution, and consequently, disadvantageously causing the decrease of discharge capacity or elevation of internal resistance.

On the other hand, recently, a solid-state battery is remarked from the viewpoint of improving safety, increasing throughput and increasing energy density. In the solid-state battery, a problem is to construct a good interface between a positive electrode active material or a negative electrode active material and a solid electrolyte layer. In a lithium-ion secondary battery using a non-aqueous electrolyte solution, a good interface can be constructed using a positive electrode active material layer and a negative electrode active material layer, and an electrolyte solution. On the other hand, in the case of a solid-state lithium-ion secondary battery, since the entirety of the battery is constituted by solids, the contact of the positive electrode active material or the negative electrode active material and the solid electrolyte likely to be a point contact, and since a void is likely to be formed, the decrease of performances due to insufficiency of a contact interface is concerned.

Therefore, it is studied that at least a part of the positive electrode active material is coated by a coating material to form a good solid-solid interface in a solid-state lithium-ion secondary battery. Patent Publication 1 discloses a solid-state battery using a positive electrode material in which at least a part of a surface of the positive electrode active material containing nickel, cobalt and manganese is coated by a lithium niobate. Patent Publication 3 also discloses that discharge capacity is improved and elevation of internal resistance are suppressed by using a lithium niobate as a coating material for coating a positive electrode in a solid lithium-ion battery.

Although a good contact interface is obtained by using such a coating material, reactions other than an electrode reaction may cause between an electrode active material and a solid electrolyte at an interface of the electrode active material and the solid electrolyte also in the solid-state lithium-ion secondary battery, when a potential is applied during charging, as in the case of a non-aqueous electrolyte solution-based lithium-ion secondary battery. Even if a good contact interface could be formed, interface resistance is disadvantageously increased by the influence of these reaction products. In fact, since oxidation resistance of a lithium niobate is not sufficient, improvement is not said to be sufficient from the viewpoint of discharge capacity and internal resistance, and it is not said that sufficient performance can be secured when considering the use in the field requiring high performance such as an onboard application.

In view of the above, it is important how to keep interface resistance low in the solid-state lithium-ion secondary battery, and it is said that there are needs to coat a positive electrode active material with a proper material without increasing interface resistance. It is expected that providing a proper positive electrode active material coating material leads to improvement of interface resistance in the solid-state lithium-ion secondary battery and additionally, suppresses the degradation of an electrolyte solution in a non-aqueous electrolyte solution-based lithium-ion secondary battery, thereby contributing to improvement of performances of a battery.

### PRIOR ART REFERENCES

### PATENT PUBLICATIONS

Patent Publication 1: Japanese Patent Laid-Open No. 2023-137680
Patent Publication 2: Japanese Patent Laid-Open No. 2023-010319
Patent Publication 3: WO 2019/146216

### SUMMARY OF THE INVENTION

### PROBLEMS TO BE SOLVED BY THE INVENTION

The present invention is made in view of the above problems, and the purpose thereof is to provide a positive electrode active material coating material improving discharge capacity and suppressing the increase of internal resistance of a secondary battery.

### MEANS TO SOLVE THE PROBLEMS

The present invention relates to the following [1] to [4]:
[1] A positive electrode active material coating material for coating a positive electrode active material characterized by containing a compound composed of at least any one or more atoms of an alkali metal, an alkaline-earth metal and Al, and F as Component (A) and containing any one or more of compounds represented by Chemical Formula (1) and/or Chemical Formula (2) as Component (B): 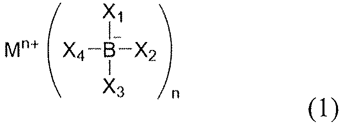 wherein:
   the Mⁿ⁺ is an alkali metal ion or an alkaline-earth metal ion, and n represents the number of valency, and
   the X₁ to X₄ represent a halogen atom, a hydrocarbon group or an alkoxy group having the number of carbon atoms of from 1 to 10, or a hydrocarbon group or an alkoxy group having the number of carbon atoms ranging from 1 to 10, which has at least any one of a halogen atom or an unsaturated bond, or
   two groups of X₁ to X₄ are bound to each other to form a cyclic structure of -OOC-COO-, -OOCO-, -OOC-Y₁-COO-, -OOC-Y₂-O- or -O-Y₃-O-, wherein the Y₁, Y₂ and Y₃ are a group having a linear or a cyclic structure, and represent a hydrocarbon group having the number of carbon atoms of from 1 to 10 or a hydrocarbon group having at least any one of a halogen atom, an unsaturated bond or a heteroatom,
   provided that at least one of X₁ to X₄ is a fluorine atom: 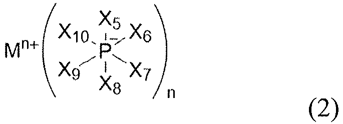
   wherein:
      the Mⁿ⁺ is an alkali metal ion or an alkaline-earth metal ion, and **n** represents the number of valency, and
      the X₅ to X₁₀ represent a halogen atom, a hydrocarbon group or an alkoxy group having the number of carbon atoms of from 1 to 10, or a hydrocarbon group or an alkoxy group having the number of carbon atoms ranging from 1 to 10, which has at least any one of a halogen atom or an unsaturated bond, or
      at least two groups of X₅ to X₁₀ are bound to each other to form a cyclic structure of -OOC-COO-, -OOCO-, -OOC-Y₁-COO-, -OOC-Y₂-O- or -O-Y₃-O-, wherein the Y₁, Y₂ and Y₃ each, independently, have a linear or a cyclic structure, and represent a hydrocarbon group having the number of carbon atoms of from 1 to 10, or a hydrocarbon group having at least any one of a halogen atom, an unsaturated bond or a heteroatom,
      provided that at least one of X₅ to X₁₀ is a fluorine atom.
[2] A positive electrode using a positive electrode active material coated by a positive electrode active material coating material as defined in [1], wherein the positive electrode active material contains a transition metal oxide.
[3] A positive electrode using a positive electrode active material coated by a positive electrode active material coating material as defined in [1], wherein the positive electrode active material contains an oxide containing two transition metals or an oxide containing three transition metals.
[4] A secondary battery containing a positive electrode as defined in any one of [2] to [3], an electrolyte solution and a negative electrode.

### EFFECTS OF THE INVENTION

The present invention provides a positive electrode active material coating material improving discharge capacity and suppressing the elevation of internal resistance of a secondary battery.

### BRIEF DESCRIPTION OF THE DRAWINGS

[FIG. 1] FIG. 1 is a cross-sectional schematic view of a cell evaluating a non-aqueous electrolyte solution-based secondary battery.
[FIG. 2] FIG. 2 is a cross-sectional schematic view of a cell evaluating a solid-state battery.

### MODES FOR CARRYING OUT THE INVENTION

As a result of aggressively studying for solving the above problems, the present inventors newly found that the problems can be solved by using the specified Components (A) and (B) as a positive electrode active material coating material. Although the mechanism is not definite, it is considered that the increase of discharge capacity/elevation of internal resistance can be suppressed by preventing degradation of a positive electrode due to dissolution of a transition metal.

### (Positive Electrode Active Material Coating Material)

Firstly, a positive electrode active material coating material of the present embodiments is explained hereinbelow.

The positive electrode active material coating material of the present embodiments is characterized by containing a compound composed of at least any one or more elements of an alkali metal, an alkaline-earth metal and Al, and F as Component (A), and containing any one or more of compounds represented by Chemical Formula (1) and/or Chemical Formula (2) as Component (B): 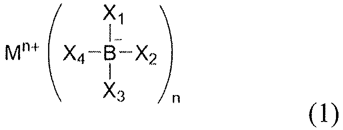 wherein,
the Mⁿ⁺ is an alkali metal ion or an alkaline-earth metal ion, and n represents the number of valency, and
the X₁ to X₄ represent a halogen atom, a hydrocarbon group or an alkoxy group having the number of carbon atoms of from 1 to 10, or a hydrocarbon group or an alkoxy group having the number of carbon atoms ranging from 1 to 10, which has at least any one of a halogen atom or an unsaturated bond, or
two groups of X₁ to X₄ are bound to each other to form a cyclic structure of -OOC-COO-, -OOCO-, -OOC-Y₁-COO-, -OOC-Y₂-O- or -O-Y₃-O-, wherein the Y₁, Y₂ and Y₃ are a group having a linear or a cyclic structure, and represent a hydrocarbon group having the number of carbon atoms of from 1 to 10, or a hydrocarbon group having at least any one of a halogen atom, an unsaturated bond or a heteroatom,
provided that at least one of X₁ to X₄ is a fluorine atom: 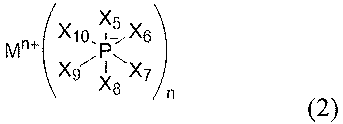
wherein,
the Mⁿ⁺ is an alkali metal ion or an alkaline-earth metal ion, and n represents the number of valency, and
the X₅ to X₁₀ represent a halogen atom, a hydrocarbon group or an alkoxy group having the number of carbon atoms of from 1 to 10, or a hydrocarbon group or an alkoxy group having the number of carbon atoms ranging from 1 to 10, which has at least any one of a halogen atom or an unsaturated bond, or
at least two groups of X₅ to X₁₀ are bound to each other to form a cyclic structure of -OOC-COO-, -OOCO-, -OOC-Y₁-COO-, -OOC-Y₂-O- or -O-Y₃-O-, wherein the Y₁, Y₂ and Y₃ each, independently, have a linear or a cyclic structure, and represent a hydrocarbon group having the number of carbon atoms of from 1 to 10, or a hydrocarbon group having at least any one of a halogen atom, an unsaturated bond or a heteroatom,
provided that at least one of X₅ to X₁₀ is a fluorine atom.

The alkali metal elements in Component (A) include lithium (Li), sodium (Na), potassium (K), rubidium (Rb), cesium (Cs) and the like, and the alkali metal elements are preferably any one or more of Li, K and Na, and more preferably Li.

The alkaline-earth elements in Component (A) include beryllium (Be), magnesium (Mg), calcium (Ca), strontium (Sr), barium (Ba), radium (Ra) and the like.

Component (A) includes, for example, LiF, NaF, KF, RbF, CsF, AlF₃, Li₃AlF₆, Na₃AlF₆, K₃AlF₆, Rb₃AlF₆, Cs₃AlF₆, Na₅Al₃F₁₄, MgF₂, CaF₂ and BaF₂, and the Component (A) preferably contains at least any one compound of these, and more preferably contains at least any one compound of LiF, AlF₃ and Li₃AlF₆. These compounds may be alone or plural.

In the Chemical Formula (1) and (2), Mⁿ⁺ represents an alkali metal ion or an alkaline-earth metal ion, and **n** represents the number of valency thereof.

In the Chemical Formula (1) and (2), the alkali metal ion includes, without being particularly limited to, a lithium ion, a sodium ion, a potassium ion, a rubidium ion, a cesium ion and the like, and the alkali metal ion is preferably a lithium ion. These alkali metal ions can be used alone or two or more of these alkali metal ions can be used in combination.

In the Chemical Formula (1) and (2), the alkaline-earth metal ion includes, without being particularly limited to, a beryllium ion, a magnesium ion, a calcium ion, a strontium ion, a barium ion, a radium ion and the like. These alkaline-earth metal ions can be used alone or two or more of these alkaline-earth metal ions can be used in combination.

In the Chemical Formula (1) and (2), among the ions listed as an exemplification of Mⁿ⁺, a lithium ion is preferred from the viewpoint of battery properties, and a lithium ion and a sodium ion are preferred from the viewpoint of easiness of obtainment and synthesis.

In the Chemical Formula (1) and (2), a halogen atom includes F, Cl, Br, I, At and the like.

In the Chemical Formula (1) and (2), a hydrocarbon group having the number of carbon atoms of from 1 to 10 or a hydrocarbon group having the number of carbon atoms ranging from 1 to 10 and having at least any one of a halogen atom or an unsaturated bond includes, without being particularly limited to, for example, straight or branched linear alkyl group such as methyl group, ethyl group, propyl group, butyl group, pentyl group, hexyl group, heptyl group, octyl group, nonyl group, and decyl group; a cyclic alkyl group such as cyclopentyl group, and cyclohexyl group; linear halogen-containing alkyl group such as 2-iodoethyl group, 2-bromoethyl group, 2-chloroethyl group, 2-fluoroethyl group, 1,2-diiodoethyl group, 1,2-dibromoethyl group, 1,2-dichloroethyl group, 1,2-difluoroethyl group, 2,2-diiodoethyl group, 2,2-dibromoethyl group, 2,2-dichloroethyl group, 2,2-difluoroethyl group, 2,2,2-tribromoethyl group, 2,2,2-trichloroethyl group, 2,2,2-trifluoroethyl group, and hexafluoro-2-propyl group; cyclic halogen-containing alkyl group such as 2-iodocyclohexyl group, 2-bromocyclohexyl group, 2-chlorocyclohexyl group, 2-fluorocyclohexyl group; linear alkenyl group such as 2-propenyl group, isopropenyl group, 2-butenyl group, and 3-butenyl group; cyclic alkenyl group such as 2-cyclopentenyl group, 2-cyclohexenyl group, and 3-cyclohexenyl group; linear alkynyl group such as 2-propynyl group, 1-butynyl group, 2-butynyl group, 3-butynyl group, 1-pentynyl group, 2-pentynyl group, 3-pentynyl group, and 4-pentynyl group; phenyl group such as phenyl group, 3-methoxyphenyl group, 4-methoxyphenyl group, 3,5-dimethoxyphenyl group, and 4-phenoxyphenyl group; halogen-containing phenyl group such as 2-iodophenyl group, 2-bromophenyl group, 2-chlorophenyl group, 2-fluorophenyl group, 3-iodophenyl group, 3-bromophenyl group, 3-chlorophenyl group, 3-fluorophenyl group, 4-iodophenyl group, 4-bromophenyl group, 4-chlorophenyl group, 4-fluorophenyl group, 3,5-diiodophenyl group, 3,5-dibromophenyl group, 3,5-dichlorophenyl group, and 3,5-difluorophenyl group; naphthyl group such as 1-naphthyl group, 2-naphthyl group, 3-amino-2-naphthyl group; and the like.

In the Chemical Formula (1) and (2), an alkoxy group having the number of carbon atoms of from 1 to 10, or an alkoxy group having the number of carbon atoms ranging from 1 to 10 and having at least any one of a halogen atom or an unsaturated bond includes, without being particularly limited to, for example, linear alkoxy group such as methoxy group, ethoxy group, propoxy group, butoxy group, pentoxy group, and hexoxy group; cyclic alkoxy group such as cyclopentoxy group, and cyclohexoxy group; linear halogen-containing alkoxy group such as 2-iodoethoxy group, 2-bromoethoxy group, 2-chloroethoxy group, 2-fluoroethoxy group, 1,2-diiodoethoxy group, 1,2-dibromoethoxy group, 1,2-dichloroethoxy group, 1,2-difluoroethoxy group, 2,2-diiodoethoxy group, 2,2-dibromoethoxy group, 2,2-dichloroethoxy group, 2,2-difluoroethoxy group, 2,2,2-tribromoethoxy group, 2,2,2-trichloroethoxy group, 2,2,2-trifluoroethoxy group, and 1,1,1,3,3,3-hexafluoro-2-propoxy group; cyclic halogen-containing alkoxy group such as 2-iodocyclohexoxy group, 2-bromocyclohexoxy group, 2-chlorocyclohexoxy group, and 2-fluorocyclohexoxy group; linear alkenyl alkoxy group such as 2-propenoxy group, isopropenoxy group, 2-butenoxy group, and 3-butenoxy group; cyclic alkenylalkoxy group such as 2-cyclopentenoxy group, 2-cyclohexenoxy group, and 3-cyclohexenoxy group; linear alkynyl alkoxy group such as 2-propynoxy group, 1-butynoxy group, 2-butynoxy group, 3-butynoxy group, 1-pentynoxy group, 2-pentynoxy group, 3-pentynoxy group, and 4-pentynoxy group; phenoxy group such as phenoxy group, 3-methyl phenoxy group, 4-methyl phenoxy group, 3,5-dimethyl phenoxy group; halogen-containing phenoxy group such as 2-iodophenoxy group, 2-bromophenoxy group, 2-chlorophenoxy group, 2-fluorophenoxy group, 3-iodophenoxy group, 3-bromophenoxy group, 3-chlorophenoxy group, 3-fluorophenoxy group, 4-iodophenoxy group, 4-bromophenoxy group, 4-chlorophenoxy group, 4-fluorophenoxy group, 3,5-diiodophenoxy group, 3,5-dibrophenoxy group, 3,5-dichlorophenoxy group, and 3,5-difluorophenoxy group; and the like.

In addition, in the Chemical Formula (1) and (2), Y₁, Y₂ and Y₃ are each, independently, a hydrocarbon group having the number of carbon atoms of from 1 to 10 which is a group having a linear or a cyclic structure, or a hydrocarbon group having at least any one of a halogen atom, an unsaturated bond or a heteroatom. These include, for example, linear alkylene group such as methylene group, ethylene group, propylene group, butylene group, pentylene group, hexylene group, heptylene group, octylene group, and nonylene group; halogen-containing linear alkylene group such as iodomethylene group, diiodomethylene group, bromomethylene group, dibromomethylene group, fluoromethylene group, difluoromethylene group, iodoethylene group, 1,1-diiodoethylene group, 1,2-diiodoethylene group, triiodoethylene group, tetraiodoethylene group, chloroethylene group, 1,1-dichloroethylene group, 1,2-dichloroethylene group, trichloroethylene group, tetrachloroethylene group, fluoroethylene group, 1,1-difluoroethylene group, 1,2-difluoroethylene group, trifluoroethylene group, and tetrafluoroethylene group; cyclic hydrocarbon group such as cyclohexylene group, phenylene group, benzylene group, naphthylene group, anthracylene group, naphthacylene group, and pentacylene group; linear alkylenedioxy group such as methylenedioxy group, ethylenedioxy group, propylenedioxy group, butylenedioxy group, pentylenedioxy group, hexylenedioxy group, heptylenedioxy group, octylenedioxy group, and nonylenedioxy group; cyclic alkylenedioxy group such as cyclohexylenedioxy group; halogen-containing linear alkylenedioxy group such as iodomethylenedioxy group, diiodomethylenedioxy group, bromomethylenedioxy group, dibromomethylenedioxy group, fluoromethylenedioxy group, difluoromethylenedioxy group, iodoethylenedioxy group, 1,1-diiodoethylenedioxy group, 1,2-diiodoethylenedioxy group, triiodoethylenedioxy group, tetraiodoethylenedioxy group, chloroethylenedioxy group, 1,1-dichloroethylenedioxy group, 1,2-dichloroethylenedioxy group, trichloroethylenedioxy group, tetrachloroethylenedioxy group, fluoroethylenedioxy group, 1,1-difluoroethylenedioxy group, 1,2-difluoroethylenedioxy group, trifluoroethylenedioxy group, and tetrafluoroethylenedioxy group; arylene dioxy group such as phenylenedioxy group, benzylenedioxy group, naphthylenedioxy group, anthracylenedioxy group, naphthacylenedioxy group, and pentacylenedioxy group, and a part or all of which are substituted with a halogen atom; and the like.

Component (B) represented by the Chemical Formula (1) preferably at least includes lithium difluoro(oxalato)borate, sodium difluoro(oxalato)borate, and potassium difluoro(oxalato)borate. These may be alone or plural.

Component (B) represented by the Chemical Formula (2) preferably at least includes lithium difluoro bis(oxalato)phosphate, sodium difluoro bis(oxalato)phosphate, potassium difluoro bis(oxalato)phosphate, lithium tetrafluoro(oxalato)phosphate, sodium tetrafluoro(oxalato)phosphate, or potassium tetrafluoro(oxalato)phosphate. These may be alone or plural.

The content of Component A is preferably from 30% by mol to 99% by mol, more preferably from 40% by mol to 95% by mol, and even more preferably from 70% by mol to 90% by mol in the positive electrode active material coating material, from the viewpoints of improving discharge capacity and suppressing the increase of internal resistance.

The content of Component B is preferably from 1% by mol to 70% by mol, more preferably from 5% by mol to 60% by mol, and even more preferably from 10% by mol to 30% by mol in the positive electrode active material coating material, from the viewpoints of improving discharge capacity and suppressing the increase of internal resistance.

The positive electrode active material coating material according to the present embodiments can optionally contain titanates, zirconates, hafnium acids, niobates, tantalates, alminates and the like beside Components A and B.

The positive electrode active material coating material according to the present embodiments can be used as a solid electrolyte in addition to the application for coating the positive electrode active material.

### (Coating to Positive Electrode Active Material)

As used herein, coating to positive electrode active material refers to the presence of the positive electrode active material coating material of the present invention on the surface of the positive electrode active material.

A method of carrying out coating on a positive electrode active material in the present embodiments includes a tumbling fluidized method using a tumbling fluidized granulation coating device, a method using a spray drier, a mechanochemical milling method, a method of distilling off a solvent from a slurry in which a positive electrode active material is mixed into the dissolved solution of a precursor of a coating material and then sintering the slurry, a method of distilling off a solvent from a slurry in which a positive electrode active material is mixed into a solution of a coating material, CVD (Chemical Vapor Deposition) method, PVD (Physical Vapor Deposition) method, a method using a pulverizer, a manual method using a mortar and a pestle, and the like, but the method of carrying out coating on a positive electrode active material is not limited thereto.

The coating amount of a positive electrode active material coating material in the present embodiments is exemplified by an embodiment of mixing an amount of from 0.01 to 100 parts by mass, from 0.1 to 50 parts by mass and from 1 to 20 parts by mass based on 100 parts by mass of a positive electrode active material.

A protective membrane resembling an SEI can be previously produced directly on a surface of the positive electrode active material by using a positive electrode using a positive electrode active material coated with a positive electrode active material coating material in the present embodiments, in a non-aqueous electrolyte solution-based lithium-ion battery, without using a SEI forming technique by an electrochemical reaction of an additive added to a conventional non-aqueous electrolyte solution in a process of producing a battery. Therefore, some problems accompanying upon forming an SEI by an electrochemical reaction can be overcome, thereby contributing to stabilization of performances. In addition, it is considered that dissolution of a transition metal or degradation of an electrolyte solution upon charging can be effectively prevented by using the positive electrode active material coating material of the present invention to improve discharge capacity / suppress the elevation of internal resistance.

Also in an all solid-state battery, reactions other than electrode reaction may cause between an electrode active material and a solid electrolyte at an interface between the electrode active material and the solid electrolyte when a potential is applied during charging, as in the case of a non-aqueous electrolyte solution-based lithium-ion secondary battery. Even if a good contact interface could be formed, interface resistance is disadvantageously increased by the influence of these reaction products. In fact, since a lithium niobate traditionally known as a positive electrode active material coating material does not have sufficient oxidation resistance, improvement was not said to be sufficient from the viewpoints of discharge capacity and internal resistance. It is considered that dissolution of a transition metal or degradation of a solid electrolyte upon charging can be more effectively prevented by using the positive electrode active material coating material of the present invention, to improve discharge capacity / suppress the elevation of internal resistance.

### (Secondary Battery)

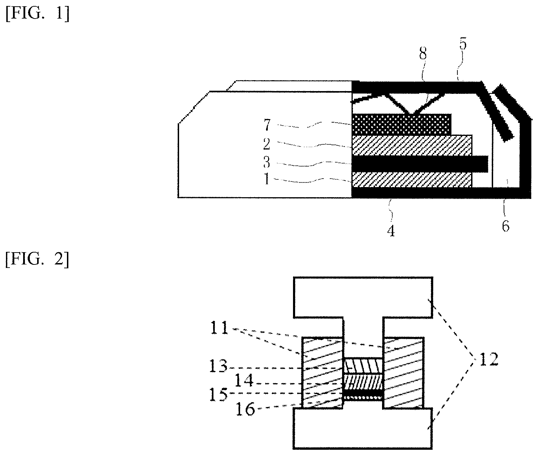

Next, as a secondary battery of the present invention, the examples of a non-aqueous electrolyte solution-based lithium-ion secondary battery and an all solid-state lithium-ion secondary battery are explained hereinbelow. FIG. 1 is a cross-sectional schematic diagram showing a non-aqueous electrolyte solution-based lithium-ion secondary battery provided with the positive electrode active material coating material, and FIG. 2 is a cross-sectional schematic diagram showing an all solid-state lithium-ion secondary battery provided with the positive electrode active material coating material.

### (Cell Constitution of Non-Aqueous Electrolyte Solution-Based Secondary Battery)

As shown in FIG. 1, the non-aqueous electrolyte solution-based lithium-ion secondary battery of the present embodiments has a structure accommodating a laminate containing a positive electrode 1, a separator 3, a negative electrode 2, and a spacer 7 in this order from a positive electrode can 4 side in an internal space formed with the positive electrode can 4 and a negative electrode can 5. The positive electrode 1 and the negative electrode 2 are properly pressed and fixed by intercalating a spring 8 between the negative electrode can 5 and the spacer 7. A non-aqueous electrolyte solution is immersed between the positive electrode 1, the separator 3 and the negative electrode 2. The positive electrode can 4 and the negative electrode can 5 are bonded by sandwiching the both in a state where a gasket 6 is intercalated between the positive electrode can 4 and the negative electrode can 5, thereby allowing the laminate to be in a tightly closed state.

The positive electrode active material in a positive electrode active material layer in the positive electrode 1 includes, without being particularly limited to, for example, a transition metal compound containing a lithium ion having a spreadable structure or an oxide of the transition metal compound and a lithium. More specifically, the positive electrode active material is, for example, LiCoO₂; LiNiO₂; LiMnO₂; LiMn₂O₄; a solid solution of Li₂MnO₃ and LiMeO₂, wherein Me = Mn, Co or Ni; LiFePO₄; LiMnₓFe_{y}PO₄ (0.5 ≤ x ≤ 0.75, 0.25 ≤ y ≤ 0.5, x + y = 1); LiCoPO₄; LiMnPO₄; LiNiPO₄; Li₂CoP₂O₇; Li₂FePO₄F; an oxide containing two transition metals; an oxide containing three transition metals; LiFeF₃; an oxide such as TiO₂, V₂O₅ and MoO₃; and a sulfide such as TiS₂ and FeS. In addition, as a positive electrode active material, a conductive polymer such as polyacetylene, polyparaphenylene, polyaniline and polypyrrole; an activated carbon; a polymer generating a radical; a carbon material and the like may be used. Among the exemplified positive electrode active materials, in the present embodiments, an oxide containing two transition metals and an oxide containing three transition metals are preferred.

The oxide containing two transition metals includes, without being particularly limited to, for example, LiNiₓ₁Co_{y1}O_{z1} (0 < x1 < 2, 0 < y1 < 2, 2 ≤ z1 ≤ 4, 1 ≤ x1 + y1 ≤ 2), LiNiₓ₂Mn_{y2}O_{z2} (0 < x2 < 2, 0 < y2 < 2, 2 ≤ z2 ≤ 4, 1 ≤ x2 + y2 ≤ 2), LiCoₓ₃Mn_{y3}O_{z3} (0 < x3 < 2, 0 < y3 < 2, 2 ≤ z3 ≤ 4, 1 ≤ x3 + y3 ≤ 2) and the like. These oxides containing two transition metals may be an oxide containing two transition metals of which a part of an oxygen atom is substituted with other non-metal atoms such as a phosphorous atom, a boron atom and a fluorine atom.

In the oxide containing two transition metals consisting of the LiNiₓ₁Co_{y1}O_{z1} and LiNiₓ₂Mn_{y2}O_{z2}, x1 and x2 represent a composition ratio of a nickel in the oxide containing two transition metals. Each of x1 and x2 is within a range beyond 0 and less than 2, preferably within a range of 0.1 or more and 1.9 or less, and more preferably within a range of 0.5 or more and 1.5 or less. The x1 and x2 can be controlled by modulating a supplying amount of a nickel during manufacturing a positive electrode active material. In addition, y1 represents a composition ratio of a cobalt in the oxide containing two transition metals. The y1 is within a range beyond 0 and less than 2, preferably within a range of 0.1 or more and 1.9 or less, and more preferably within a range of 0.5 or more and 1.5 or less. The y1 can be controlled by modulating a supplying amount of a cobalt during manufacturing a positive electrode active material. The y2 represents a composition ratio of a manganese in the oxide containing two transition metals. The y2 is within a range beyond 0 and less than 2, preferably within a range of 0.1 or more and 1.9 or less, and more preferably within a range of 0.5 or more and 1.5 or less. The y2 can be controlled by modulating a supplying amount of a manganese during manufacturing a positive electrode active material. Incidentally, the oxide containing two transition metals consisting of LiNiₓ₂Mn_{y2}O_{z2} is preferably LiNi_{0.5}Mn_{1.5}O₄ from the viewpoints of easiness of obtainment and battery properties.

In the oxide containing two transition metals consisting of the LiCoₓ₃Mn_{y3}O_{z3}, x3 represents a composition ratio of a cobalt in the oxide containing two transition metals. The x3 is within a range beyond 0 and less than 2, preferably within a range of 0.1 or more and 1.9 or less, and more preferably within a range of 0.5 or more and 1.5 or less. The x3 can be controlled by modulating a supplying amount of a cobalt during manufacturing a positive electrode active material. The y3 represents a composition ratio of a manganese in the oxide containing two transition metals. The y3 is within a range beyond 0 and less than 2, preferably within a range of 0.1 or more and 1.9 or less, and more preferably within a range of 0.5 or more and 1.5 or less. The y3 can be controlled by modulating a supplying amount of a manganese during manufacturing a positive electrode active material.

The oxide containing three transition metals includes LiNiₓ₄Co_{y4}Mn_{z4}O₂ (0 < x4 < 1, 0 < y4 < 1, 0 < z4 < 1, x4 + y4 + z4 = 1) and LiNiₓ₅Co_{y5}Al_{z5}O₂ (0 < x5 < 1, 0 < y5 < 1, 0 < z5 < 1, x5 + y5 + z5 = 1). These oxides containing three transition metals may be an oxide containing three transition metals of which a part of oxygen atoms is substituted with other non-metal atoms such as a phosphorous atom, a boron atom and a fluorine atom.

In the oxide containing three transition metals consisting of the LiNiₓ₄Co_{y4}Mn_{z4}O₂, x4 represents a composition ratio of a nickel in the oxide containing three transition metals. The x4 is within a range beyond 0 and less than 1, preferably within a range of 0.6 or more and less than 1, and more preferably within a range of 0.6 or more and 0.9 or less. The x4 can be controlled by modulating a supplying amount of a nickel during manufacturing a positive electrode active material. In addition, y4 represents a composition ratio of a cobalt in the oxide containing three transition metals. The y4 is within a range beyond 0 and less than 1, preferably within a range of 0.05 or more and 0.2 or less, and more preferably within a range of 0.05 or more and 0.1 or less. The y4 can be controlled by modulating a supplying amount of a cobalt during manufacturing a positive electrode active material. In addition, z4 represents a composition ratio of a manganese in the oxide containing three transition metals. The z4 is within a range beyond 0 and less than 1, preferably within a range of 0.05 or more and 0.2 or less, and more preferably within a range of 0.05 or more and 0.1 or less. The z4 can be controlled by modulating a supplying amount of a manganese during manufacturing a positive electrode active material.

In the oxide containing three transition metals consisting of the LiNiₓ₅Co_{y5}Al_{z5}O₂, x5 represent a composition ratio of a nickel in the oxide containing three transition metals. The x5 is within a range beyond 0 and less than 1, preferably within a range of 0.6 or more and less than 1, and more preferably within a range of 0.6 or more and 0.9 or less. The x5 can be controlled by modulating a supplying amount of a nickel during manufacturing a positive electrode active material. In addition, y5 represents a composition ratio of a cobalt in the oxide containing three transition metals. The y5 is within a range beyond 0 and less than 1, preferably within a range of 0.05 or more and 0.2 or less, and more preferably within a range of 0.05 or more and 0.1 or less. The y5 can be controlled by modulating a supplying amount of a cobalt during manufacturing a positive electrode active material. In addition, z5 represents a composition ratio of an aluminum in the oxide containing three transition metals. The z5 is within a range beyond 0 and 1 or less, preferably within a range of 0.05 or more and 0.2 or less, and more preferably within a range of 0.05 or more and 0.1 or less. The z5 can be controlled by modulating a supplying amount of an aluminum during manufacturing the positive electrode active material.

Among the positive electrode active material exemplified above, an oxide containing three transition metals consisting of LiCoO₂; LiNiO₂; a solid solution of Li₂MnO₃ and LiMeO₂, wherein Me = Mn, Co or Ni; LiNiₓ₄Co_{y4}Mn_{z4}O₂ (0 < x4 < 1, 0 < y4 < 1, 0 < z4 < 1, x4 + y4 + z4 = 1), or LiNiₓ₅Co_{y5}Al_{z5}O₂ (0 < x5 < 1, 0 < y5 < 1, 0 < z5 < 1, x5 + y5 + z5 = 1) is preferable from the viewpoints of energy density and thermostability, and more preferably an oxide containing three transition metals consisting of LiNiₓ₄Co_{y4}Mn_{z4}O₂ (0.6 ≤ x4 < 1, 0 < y4 < 0.4, 0 < z4 < 0.4, x4 + y4 + z4 = 1, 0 < y4 + z4 ≤ 0.4) or LiNiₓ₅Co_{y5}Al_{z5}O₂ (0.6 ≤ x5 < 1, 0 < y5 < 0.4, 0 < z5 < 0.4, x5 + y5 + z5 = 1, 0 < y5 + z5 ≤ 0.4) is used.

The positive electrode 1 can be obtained by subjecting the positive electrode active material listed above to pressurized molding together with a known conductive additive and a binder or mixing the positive electrode active material with an organic solvent such as pyrrolidone together with a known conductive additive or a binder, applying a pasted mixture on a current collector such as an aluminum foil and then drying the current collector.

The material of the negative electrode active material layer in the negative electrode 2 is not particularly limited as long as the material can absorb and release a lithium, and the material includes, for example, a metal-complexed oxide, a lithium metal, a lithium alloy, a silicon, a silicon-based alloy, a silicon-based material, SiC, SiOC, a tin-based alloy, a metal oxide, a carbon material and the like.

The metal-complexed oxide includes, without being particularly limited to, for example, Li₄Ti₅O₁₂, LiFe₂O₃, LiWO₂, SnₓMe¹₁₋ₓMe²_{y}O_{z}, wherein Me¹ = Mn, Fe, Pb or Ge; Me² = Al, B, P, Si, Group 1 to 3 elements in a periodic table or a halogen; 0 < x ≤ 1, 1 ≤ y ≤ 3, 1 ≤ z ≤ 8; and the like.

The metal oxide includes, without being particularly limited to, for example, SnO, SnO₂, SiOₓ (0 < x ≤ 2), PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, and the like.

The carbon material includes, without being particularly limited to, for example, a natural graphite, an artificial graphite, a borylated graphite, a graphite fluoride, a mesocarbon microbead, a pitch-based carbon fiber graphite, a carbon nanotube, a hard carbon, fullerene, and the like.

As the negative electrode 2, a foil-formed or a powder-formed material of the electrode material can be used. In the case of powder form, the negative electrode 2 can be obtained by subjecting the material to pressurized molding together with a known conductive additive and a binder, or mixing the material with an organic solvent such as pyrrolidone together with a known conductive additive and a binder, applying the pasted mixture to a current collector such as copper foil, and then drying the current collector.

As the negative electrode 2, a foil-formed or a powder-formed material of the electrode material can be used. In the case of powder form, the negative electrode 2 can be obtained by subjecting the material to pressurized molding together with a known conductive additive and a binder, or mixing the material with an organic solvent such as pyrrolidone together with a known conductive additive and a binder, applying the pasted mixture to a current collector such as a copper foil, and then drying the current collector.

### < Electrolyte Solution in Non-Aqueous Electrolyte Solution-Based Secondary Battery >

The electrolyte solution according to the present embodiments is explained hereinafter.

The electrolyte solution is composed of an organic solvent and an electrolyte. In addition, the electrolyte solution may contain one or more additives.

### < Electrolyte >

As an electrolyte, a generally known electrolyte used in various secondary batteries can be adopted. The electrolyte preferably has an alkali metal ion as a cation from the viewpoints of solubility to a non-aqueous solvent and properties of the secondary battery. The alkali metal ion includes, for example, a lithium ion, a sodium ion, a potassium ion, and the like. For example, when the secondary battery is a lithium-ion secondary battery, a lithium salt can be used as an electrolyte.

In addition, as an electrolyte, an electrolyte having a fluorine-containing anion is preferred. The fluorine-containing anion includes, without being particularly limited to, for example, BF₄⁻, PF₆⁻, BF₃CF₃⁻, BF₃C₂F₅⁻, CF₃SO₃⁻, C₂F₅SO₃⁻, C₃F₇SO₃⁻, C₄F₉SO₃⁻, N(SO₂F)₂⁻, N(CF₃SO₂)₂⁻, N(C₂F₅SO₂)₂⁻, N(CF₃SO₂)(CF₃CO)⁻, N(CF₃SO₂)(C₂F₅SO₂)⁻ and C(CF₃SO₂)₃⁻ and the like. An electrolyte having these fluorine-containing anions can be used alone or two or more of these can be used in combination. Among the fluorine-containing anion, from the viewpoints of safety and stability of a non-aqueous electrolyte solution, and improvement of electric conductivity and cyclic property, BF₄⁻, PF₆⁻ and N(CF₃SO₂)₂⁻ are preferred, and BF₄⁻ and PF₆⁻ are particularly preferred.

The concentration of the electrolyte to the organic solvent is not particularly limited, and the concentration is usually from 0.1 to 2 M, preferably from 0.15 to 1.8 M, more preferably from 0.2 to 1.5 M, and particularly preferably from 0.3 to 1.2 M. Insufficiency of electric conductivity of the non-aqueous electrolyte solution can be prevented by adjusting the concentration to 0.1 M or more. On the other hand, the decrease of electric conductivity due to the increase of viscosity of the non-aqueous electrolyte solution can be suppressed, to prevent the decrease of performances of the secondary battery by adjusting the concentration to 2 M or less.

### < Organic Solvent >

The organic solvent (non-aqueous solvent) used in the non-aqueous electrolyte solution includes, without being particularly limited to, for example, a cyclic carbonate, a linear carbonate, a phosphate, a cyclic ether, a linear ether, a lactone compound, a linear ester, a nitril compound, an amide compound, a sulfone compound, and the like. Among these organic solvents, a carbonate is preferred from the viewpoint that the carbonate is generally used as an organic solvent for a secondary battery.

The cyclic carbonate includes, without being particularly limited to, for example, ethylene carbonate, propylene carbonate, butylene carbonate, fluoroethylene carbonate partially substituted with fluoride, trans-difluoroethylene carbonate, cis-difluoroethylene carbonate and the like.

The linear carbonate includes, without being particularly limited to, for example, dimethyl carbonate, ethyl methyl carbonate, diethyl carbonate, fluoromethyl methyl carbonate partially substituted with fluorine, difluoromethyl methyl carbonate, trifluoromethyl methyl carbonate, bis(fluoromethyl)carbonate, bis(difluoro)methyl carbonate, bis(trifluoromethyl)carbonate, 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, ethyl trifluoromethyl carbonate, diethyl carbonate such as ethyl-(2-fluoroethyl)carbonate, ethyl-(2,2-difluoroethyl)carbonate, bis(2-fluoroethyl)carbonate, ethyl-(2,2,2-trifluoroethyl)carbonate, 2,2-difluoroethyl-2'-fluoroethyl carbonate, bis(2,2-difluoroethyl)carbonate, 2,2,2-trifluoroethyl-2'-fluoroethyl carbonate, 2,2,2-trifluoroethyl-2',2'-difluoroethyl carbonate, bis(2,2,2-trifluoroethyl)carbonate, and the like.

Incidentally, the carbonate partially substituted with fluorine exhibits a function not only as an organic solvent, but also as an additive described above. The clear content in the case where the carbonate is used as a solvent and an additive is not limited, and the solvent can be used in the mixing ratio as a solvent, and the additive can be used in the content described as an additive.

The phosphate includes, without being particularly limited to, for example, trimethyl phosphate, triethyl phosphate, ethyl dimethyl phosphate, diethyl methyl phosphate, trifluoroethyl dimethyl phosphate partially substituted with fluorine, bis(trifluoroethyl)methyl phosphate, tris(trifluoroethyl) phosphate, and the like.

The cyclic ether includes, without being particularly limited to, for example, tetrahydrofuran, 2-methyl tetrahydrofuran, 1,4-dioxane, 1,3-dioxolane, and the like.

The linear ether includes, without being particularly limited to, for example, dimethoxy ethane, ethylene glycol diethyl ether, triethylene glycol dimethyl ether, tetraethylene glycol dimethyl ether, and the like.

The lactone compound includes, without being particularly limited to, for example, γ-butyrolactone, γ-valerolactone, δ- valerolactone, and the like.

The linear ester includes, without being particularly limited to, for example, methyl propionate, methyl acetate, ethyl acetate, methyl formate, methyl difluoroacetate partially substituted with fluorine, ethyl trifluoroacetate, and the like.

The nitril compound includes, without being particularly limited to, for example, acetonitrile, adiponitrile, valeronitrile, and the like.

The amide compound includes, without being particularly limited to, for example, dimethylformamide, and the like.

The sulfonate compound includes, without being particularly limited to, for example, sulfolane, sulfolene, 3-methyl sulfolane, and the like.

These organic solvents can be used alone or two or more of organic solvents can be used in a mixture.

### < Additive >

A cyclic carbonate having an unsaturated bond, a cyclic carbonate having a halogen atom, a cyclic sulfonate, a cyclic sulfate, a cyclic sulfite, phosphates, sulfonyl imide salts, sulfonate salts and the like are listed.

### [Cyclic Carbonate Having Unsaturated Bond]

As a cyclic carbonate having an unsaturated bond in the additive, the kinds thereof are not particularly limited, without impairing properties of a non-aqueous electrolyte solution and a secondary battery using the same, and various carbonates can be selected. The number of the unsaturated bonds is preferably from 1 to 10, more preferably from 1 to 5, and particularly preferably from 1 to 3. The cyclic carbonate having an unsaturated bond specifically includes, for example, vinylene carbonate, iodovinylene carbonate, bromovinylene carbonate, chlorovinylene carbonate, fluorovinylene carbonate, 1,2-diiodovinylene carbonate, 1,2-dibromovinylene carbonate, 1,2-dichlorovinylene carbonate, 1,2-difluorovinylene carbonate, methyl vinylene carbonate, iodomethyl vinylene carbonate, bromomethyl vinylene carbonate, chloromethyl vinylene carbonate, fluoromethyl vinylene carbonate, dichloromethyl vinylene carbonate, dibromomethyl vinylene carbonate, dichloromethyl vinylene carbonate, difluoromethyl vinylene carbonate, triiodomethyl vinylene carbonate, tribromomethyl vinylene carbonate, trichloromethyl vinylene carbonate, trifluoromethyl vinylene carbonate, ethyl vinylene carbonate, propyl vinylene carbonate, butyl vinylene carbonate, dimethyl vinylene carbonate, diethyl vinylene carbonate, dipropyl vinylene carbonate, vinyl ethylene carbonate, and the like. Incidentally, the cyclic carbonate having the unsaturated bond is preferably vinylene carbonate, from the viewpoint of easiness of obtainment.

### [Cyclic Carbonate Having Halogen Atom]

As a cyclic carbonate having a halogen atom in the additive, the kinds thereof are not particularly limited, without impairing properties of the non-aqueous electrolyte solution and the secondary battery using the same in the present embodiments, and various carbonates can be selected. Here, a halogen atom means a fluorine atom, a chlorine atom, a bromine atom or an iodine atom. The cyclic carbonate having a halogen atom specifically includes, for example, iodoethylene carbonate, bromoethylene carbonate, chloroethylene carbonate, fluoroethylene carbonate, 1,2-diiodoethylene carbonate, 1,2-dibromoethylene carbonate, 1,2-dichloroethylene carbonate, 1,2-difluoroethylene carbonate, and the like. Incidentally, the cyclic carbonate having an unsaturated bond is preferably chloroethylene carbonate and fluoroethylene carbonate, from the viewpoint of easiness of obtainment.

### [Cyclic Sulfonate]

As a cyclic sulfonate in the additive, the kinds thereof are not particularly limited, without impairing properties of the non-aqueous electrolyte solution and the secondary battery using the same in the present embodiments, and various sulfonates can be selected. The cyclic sulfonate specifically includes, for example, 1,3-paopanesultone, 2,4-butanesultone, 1,4-butanesultone, ethylene sulfite, and the like. Incidentally, the cyclic sulfonate is preferably 1,3-paopanesultone and ethylene sulfite, from the viewpoint of easiness of obtainment.

### [Cyclic Sulfate]

As a cyclic sulfate in the additive, the kinds thereof are not particularly limited, without impairing properties of the non-aqueous electrolyte solution and the secondary battery using the same in the present embodiments, and various sulfates can be selected. The cyclic sulfate specifically includes, for example, ethylene sulfate, and the like.

### [Cyclic Sulfite]

As a cyclic sulfite in the additive, the kinds thereof are not particularly limited, without impairing properties of the non-aqueous electrolyte solution and the secondary battery using the same in the present embodiments, and various sulfite can be selected. The cyclic sulfate specifically includes, for example, ethylene sulfite, 1,3-propylene sulfite, and the like.

### [Phosphates]

As phosphates in the additive, the kinds thereof are not particularly limited, without impairing properties of the non-aqueous electrolyte solution and the secondary battery using the same in the present embodiments, and various phosphates can be selected. The cyclic sulfate specifically includes, for example, lithium difluorophosphate, lithium monofluorophosphate, and the like.

### [Sulfonyl Imide Salts]

As sulfonyl imide salts in the additive, the kinds thereof are not particularly limited, without impairing properties of the non-aqueous electrolyte solution and the secondary battery using the same in the present embodiments, and various sulfonyl imide salts can be selected. The sulfonyl imide salts specifically include, for example, lithium bis(fluorosulfonyl)imide, lithium bis(trifluoromethanesulfonyl)imide, and the like.

### [Sulphonates]

As sulfonates in the additive, the kinds thereof are not particularly limited, without impairing properties of the non-aqueous electrolyte solution and the secondary battery using the same in the present embodiments, and various sulfonates can be selected. The sulfonates specifically include, for example, lithium fluorosulfonate, lithium methanesulfonate, lithium trifluoromethanesulfonate, and the like.

The additive may be used alone or two or more of the additives may be used in a mixture.

### < Solid Electrolyte in Solid-State Secondary Battery >

As the solid electrolyte, a conventionally known solid electrolyte used in various electric storage devices can be adopted. For example, in the case where an electric storage device is a solid-state lithium-ion secondary battery, an inorganic solid material containing lithium as a constituting element can be suitably used.

In addition, an electrolyte containing a sulfur element or an oxygen element is preferred as the electrolyte. The specific example of the electrolyte containing a sulfur element includes, for example, Li_{9.54}Si_{1.74}P_{1.44}S_{11.7}Cl_{0.3}, Li₁₀GeP₂S₁₂ (LGPS), Li₆PS₅Cl, 30Li₂S•26B₂S₃•44LiI, 50Li₂S•17P₂S₅•33LiBH₄, 63Li₂S•36SiS₂•1Li₃PO₄, 57Li₂S•38SiS₂•5Li₄SiO₄, 70Li₂S•30P₂S₅, Li₇P₃S₁₁, Li_{3.25}P_{0.95}S₄ and the like. The specific example of the electrolyte containing an oxygen element includes Li_{0.34}La_{0.51}TiO_{2.94}, Li_{1.3}Al_{0.3}Ti_{1.7}(PO₄)₃, Li₇La₃Zr₂O₁₂ (LLZ), 50Li₄SiO₄•50Li₃BO₃, Li_{2.0}PO_{3.3}N_{0.46} (LiPON), Li_{3.6}Si_{0.6}P_{0.4}O₄, Li_{1.07}Al_{0.69}Ti_{1.46}(PO₄)₃, Li_{1.5}Al_{0.5}Ge_{1.5}(PO₄)₃ and the like, and these electrolytes can be used alone or two or more of these electrolytes can be used in combination. Li₆PS₅Cl is particularly preferred from the viewpoint of electric conductivity.

When the solid electrolyte and the positive electrode active material coating material are used in a solid-state secondary battery, the solid electrolyte and the positive electrode active material coating material may contain an electrolyte solution. In this case, large amounts of non-aqueous electrolyte solutions are not contained as the conventional non-aqueous electrolyte solution-based lithium-ion secondary battery, and small amounts of non-aqueous electrolyte solutions are used to compensate for incomplete contact of an active material with a solid electrolyte. Since only small amounts of non-aqueous electrolyte solutions are used, the battery apparently resembles a solid-state battery, and the battery is often referred to as a pseudo-solid-state battery.

An electrolyte solution which may be contained when used in the solid-state secondary battery is composed of an organic solvent and an electrolyte, the electrolyte solution may contain one or more additives, and an electrolyte solution in the non-aqueous electrolyte solution-based secondary battery can be used.

### (Cell Constitution of Solid-State Battery)

As shown in FIG. 2, a product obtained by inserting a solid electrolyte 14 and a product obtained by inserting a positive electrode-mixed material 13 in which a positive electrode active material using a positive electrode active material coated with a positive electrode active material coating material, a solid electrolyte and a conductive additive are mixed in a given ratio thereon are combined to produce two-layers of pressurized powders, and the two-layers of pressurized powders are inserted into a cylindrical insulating tube 11. Further, an indium foil 15 and a lithium foil 16 are present under the solid electrolyte 14, and these are pressure bonded onto a stainless steel jig 12, to constitute a battery. The cylindrical insulating tube 11 of which the upper and the lower sides are sandwiched with stainless steel jigs 12 is accommodated in a tightly closed cell for evaluating a battery, KP-solidCell, manufactured by Hohsen Corp.

The shape of the secondary battery of the present embodiments are not particularly limited, and the shape includes, for example, a cylindrical shape, a rectangle shape, a laminate shape and the like in addition to a coin-formed cell.

The all solid-state lithium-ion secondary battery provided with a coating material of the present embodiments is suitable for, for example, a power supply for a car such as an electric vehicle (xEV) or a hybrid electric car requiring high operating voltage and high-temperature storage property.

The charging voltage of a lithium secondary battery of the present embodiments is preferably set within a range of from 4.3 to 5.0 V, more preferably from 4.35 to 4.8 V, and particularly preferably within a range of from 4.4 to 4.7 V of end-of-charge voltage of a positive electrode on a lithium metal basis, in the case where LiCoO₂ or LiNi_{0/3}Co_{1/3}Mn_{1/3}O₂ is used. In addition, the charging voltage is, for example, set preferably within a range of from 4.7 to 6.0 V, more preferably from 4.9 to 5.9 V, and particularly preferably within a range of from 5.0 to 5.8 V of end-of-charge voltage of a positive electrode on a lithium metal basis, in the case where LiMn_{1.5}Ni_{0.5}O₄ is used. The lithium metal basis refers to that Li⁺/Li which is an equilibrium potential between a lithium ion and a lithium metal is considered as a basis of a potential (0V). In the cell constitution of a solid-state battery shown in FIG.2, an indium foil 15 and a lithium foil 16 are pressure bonded, to form a negative electrode. Since a potential shown by a negative electrode composed of the indium foil and the lithium foil at that time, i.e. Li⁺/LiIn is +0.6 V on a lithium metal basis, if the potential is described in an interelectrode voltage of positive electrode-negative electrode in the cell constitution of the solid-state battery of FIG.2, for example, the potential is set preferably within a range of from 3.7 to 4.4 V, more preferably from 3.75 to 4.2 V, and particularly preferably within a range of from 3.8 to 4.1 V of the end-of-charge voltage, in the case where LiCoO₂ or LiNi_{1/3}Co_{1/3}Mn_{1/3}O₂ is used. In addition, for example, the interelectrode voltage of positive electrode-negative electrode in the cell constitution of the solid-state battery of FIG.2 is set preferably within a range of from 4.1 to 5.4 V, more preferably from 4.3 to 5.3 V, and particularly preferably within a range of from 4.4 to 5.2 V, in the case where LiMn_{1.5}Ni_{0.5}O₄ is used.

The solid-state lithium-ion secondary battery of the present embodiments can exhibit excellent discharging property and internal resistance, and the coating material of the present embodiments can be suitably used in, for example, an all solid-state lithium-ion secondary battery. However, the solid-state lithium-ion secondary battery shown in FIG. 2 is an exemplification of an embodiment of the secondary battery of the present invention, and the secondary battery of the present invention is not limited thereto.

### EXAMPLES

Hereinbelow, the suitable Production Examples and Examples of the present invention will be exemplarily explained in detail. However, the described production examples, materials, formulated amounts, and the like do not limit the scope of the present invention thereto, without particularly limitative descriptions.

### (Example 1)

### < Synthesis of Positive Electrode Active Material Coating Material >

Li₃AlF₆, manufactured by STELLA CHEMIFA CORPORATION and lithium difluoro(oxalato)borate, LiFOB, manufactured by Sigma-Aldrich, were prepared in a molar ratio of Li₃AlF₆:LiFOB = 4.0:1.0 as a raw material powder in argon atmosphere having a dew point of -80°C or lower. The mixture was placed into 45 mL of zirconia pot, manufactured by Fritsch, into which seven zirconia balls, manufactured by NIKKATO CORPORATION, having φ = 10 mm and 3 g of zirconia balls having φ = 3 mm are supplied, and subjected to a milling treatment using a planetary ball mill, P-7S, manufactured by Fritsch, for 7.5 hours at 600 rpm. The powders of coating materials in Example 1 were thus obtained.

### < Performing Positive Electrode Coating >

As a positive electrode active material for a positive electrode active material layer, lithium cobaltate, LCO, manufactured by NIPPON CHEMICAL INDUSTRIAL CO.,LTD. having a mean particle size of 10 µm was used. The LCO and coating materials are weighted in a mass ratio of 60:3 ( = LCO : coating material), and the LCO and coating materials are placed into a PTFE vessel together with zirconia ball having φ = 10 mm, and the contents are mixed with Mini Mill P-23, manufactured by Fritsch, at 15 Hz for 7 minutes, to prepare materials for positive electrode.

### < Producing Positive Electrode-Mixed Material >

The materials for positive electrode, solid electrolytes, Li₆PS₅Cl, manufactured by Sigma-Aldrich, and conductive additives, AB, manufactured by Denka Company Limited were weighted in a mass ratio of 63:39:1 ( = materials for positive electrode : solid electrolyte : AB), materials for positive electrode, solid electrolyte and AB were placed into a PTFE vessel together with zirconia ball having φ = 10 mm, and the contents were mixed with Mini Mill P-23, manufactured by Fritsch, at 15 Hz for 1 minute, to prepare positive electrode-mixed materials.

### < Producing All Solid-State Battery >

The 80 mg of solid electrolytes were introduced into a cylindrical polycarbonate insulating tube having an inner diameter of 10 mm in argon atmosphere having a dew point of -80°C or lower, electron-conducting stainless-steel members were inserted from upper and lower sides of the tube, and the contents were subjected to temporary molding at 1 MPa, to prepare a solid electrolyte layer. The positive electrode-mixed material prepared in the above was laminated in an amount of 10.3 mg on the solid electrolyte layer, the laminate was subjected to pressurized molding again at 28 MPa for 10 minutes. Thereafter, the lower member is removed and a lithium foil, manufactured by Honjo Metal Co., Ltd. which is previously cut into φ = 7 mm is pressure bonded thereto, and indium foil, manufactured by The Nilaco Corporation which is previously cut into φ = 8 mm is pressure bonded onto the lithium foil to cover the lithium foil. A battery-evaluating cell was assembled by attaching the lower member to the insulating tube, accommodating the lower member in a tightly closed battery-evaluating cell, KP-solidCell, manufactured by Hohsen Corp, and holding the lower member for 5 minutes at 5 N•m. The evaluating cell can continue to be pressed by a given holding force in the direction of laminating.

### < Cycle Test >

Each cell was charged to 3.9 V of end-of-charge voltage at 0.066 mA/cm² of charging current in a thermostat at 25°C and discharged to 2.0 V of end-of-discharge voltage at 0.066 mA/cm² of discharging current. Here, the expression of the voltage is not based on a lithium metal basis as explained in paragraph 0094, but refers to voltage between negative electrode-positive electrode. All the expressions of the voltage in Examples and Comparative Examples hereinbelow are similarly rendered as a voltage between negative electrode-positive electrode, unless specified otherwise. Charging and discharging cycles were carried out two times under the condition. Subsequently, the cell was charged to 3.9 V of end-of-charge voltage at 0.33 mA/cm² of charging current and discharged to 2.0 V of end-of- discharge voltage at 0.33 mA/cm² of discharging current. Charging and discharging cycles were carried out three times under the condition. Subsequently, the cell was charged to 3.9 V of end-of-charge voltage at 0.66 mA/cm² of discharging current and discharged to 2.0 V of end-of-discharge voltage at 0.66 mA/cm² of discharging current. Charging and discharging cycles were carried out five times under the condition. As to the discharge capacity at first cycle of each Examples and/or Comparative Examples, the ratio in the case where each of values of Comparative Example 1 in Table 1, Comparative Example 4 in Table 2 and Comparative Example 7 in Table 3 is defined as 100 is described.

### < Measurement of Internal Resistance >

Evaluating cells were connected to potentiostat, Biologic, VSP-300S loaded with a frequency response analyzer, while keeping the pressure applied thereto after the above cycle test of total 10 cycles. The upper part of the evaluating cell was connected to an operating electrode and a potential-measuring terminal. The lower part of the evaluating cell was connected to an opposite electrode and a reference electrode. Impedance of the all solid-state battery in each Examples and/or Comparative Examples was measured by electrochemical impedance measuring method at 25°C. As to the measurement data at that time, the ratio in the case where each of values of Comparative Example 1 in Table 1, Comparative Example 4 in Table 2 and Comparative Example 7 in Table 3 is defined as 100 is described.

### (Example 2)

Example 2 is an example in which a product having a molar ratio of Li₃AlF₆:LiFOB = 5.0:1.0 is used as the positive electrode active material coating material.

### (Example 3)

Example 3 is an example in which a product having a molar ratio of Li₃AlF₆:LiFOB = 1.0:1.0 is used as the positive electrode active material coating material.

### (Comparative Example 1)

Comparative Example 1 is an example in which the positive electrode active material coating material is not used.

### (Comparative Example 2)

Comparative Example 2 is an example in which only lithium niobate is used as the positive electrode active material coating material.

### (Comparative Example 3)

Comparative Example 3 is an example in which only Li₃AlF₆ is used as the positive electrode active material coating material.

### (Example 4)

Example 4 is an example in which LiMn_{1.5}Ni_{0.5}O₄ is used as the positive electrode active material and a product having a molar ratio of Li₃AlF₆:LiFOB = 4.0:1.0 is used as the positive electrode active material coating material. Incidentally, in the cycle test, charging was carried out to 4.9 V of end-of-charging voltage, and discharging was carried out to 2.0 V of end-of-discharging voltage.

### (Comparative Example 4)

Comparative Example 4 is an example in which LiMn_{1.5}Ni_{0.5}O₄ is used as the positive electrode active material, and the positive electrode active material coating material is not used. Incidentally, in the cycle test, charging was carried out to 4.9 V of end-of-charging voltage, and discharging was carried out to 2.0 V of end-of-discharging voltage.

### (Comparative Example 5)

Comparative Example 5 is an example in which LiMn_{1.5}Ni_{0.5}O₄ is used as the positive electrode active material, and only lithium niobate is used as the positive electrode active material coating material. Incidentally, in the cycle test, charging was carried out to 4.9 V of end-of-charging voltage, and discharging was carried out to 2.0 V of end-of-discharging voltage.

### (Comparative Example 6)

Comparative Example 6 is an example in which LiMn_{1.5}Ni_{0.5}O₄ is used as the positive electrode active material, and only Li₃AlF₆ is used as the positive electrode active material coating material. Incidentally, in the cycle test, charging was carried out to 4.9 V of end-of-charging voltage, and discharging was carried out to 2.0 V of end-of-discharging voltage.

### (Example 5)

Example 5 is an example in which LiNi_{0/3}Co_{1/3}Mn_{1/3}O₂ is used as the positive electrode active material, and a product having a molar ratio of Li₃AlF₆:LiFOB = 4.0:1.0 is used as the positive electrode active material coating material.

### (Comparative Example 7)

Comparative Example 7 is an example in which LiNi_{1/3}Co_{1/3}Mn_{1/3}O₂ is used as the positive electrode active material, and the positive electrode active material coating material is not used.

### (Comparative Example 8)

Comparative Example 8 is an example in which LiNi_{0/3}Co_{1/3}Mn_{1/3}O₂ is used as the positive electrode active material, and only lithium niobate is used as the positive electrode active material coating material.

### (Comparative Example 9)

Comparative Example 9 is an example in which LiNi_{1/3}Co_{1/3}Mn_{1/3}O₂ is used as the positive electrode active material, and only Li₃AlF₆ is used as the positive electrode active material coating material.

### (Example 6)

Li₃AlF₆, manufactured by STELLA CHEMIFA CORPORATION and lithium difluoro bis(oxalato)phosphate, LiDFBOP, manufactured by Tokyo Chemical Industry Co., Ltd. were prepared in a molar ratio of Li₃AlF₆:LiDFBOP = 4.0:1.0 as a raw material powder in argon atmosphere having a dew point of -80°C or lower. The mixture was placed into 45 mL of zirconia pot, manufactured by Fritsch, into which seven zirconia balls, manufactured by NIKKATO CORPORATION, having φ = 10 mm and 3 g of zirconia balls having φ = 3 mm are supplied, and subjected to a milling treatment using a planetary ball mill, P-7S, manufactured by Fritsch, for 7.5 hours at 600 rpm. The powders of coating materials in Example 6 were thus obtained.

Example 6 is an example in which LCO is used as the positive electrode active material, and a product having a molar ratio of Li₃AlF₆:LiDFBOP = 4.0:1.0 is used as the positive electrode active material coating material.

### (Example 7)

Example 7 is an example in which LCO is used as the positive electrode active material, and a product having a molar ratio of Li₃AlF₆:LiDFBOP = 5.0:1.0 is used as the positive electrode active material coating material.

### (Example 8)

Example 8 is an example in which LCO is used as the positive electrode active material, and a product having molar ratio of Li₃AlF₆:LiDFBOP = 1.0:1.0 is used as the positive electrode active material coating material.

### (Example 9)

Example 9 is an example in which LiMn_{1.5}Ni_{0.5}O₄ is used as the positive electrode active material, and a product having a molar ratio of Li₃AlF₆:LiDFBOP = 4.0:1.0 is used as the positive electrode active material coating material. Incidentally, in the cycle test, charging was carried out to 4.9 V of end-of-charging voltage, and discharging was carried out to 2.0 V of end-of-discharging voltage.

### (Example 10)

Example 10 is an example in which LiNi_{1/3}Co_{1/3}Mn_{1/3}O₂ is used as the positive electrode active material, and a product having a molar ratio of Li₃AlF₆:LiDFBOP = 4.0:1.0 is used as the positive electrode active material coating material.

### [Table 1]

**Table 1**

| | Discharging Capacity at Cycle 1 [%] | Resistance at Cycle 10 [%] |
|---|---|---|
| Example 1 | 113 | 39 |
| Example 2 | 108 | 59 |
| Example 3 | 105 | 61 |
| Example 6 | 112 | 43 |
| Example 7 | 105 | 59 |
| Example 8 | 104 | 60 |
| Comparative Example 1 | 100 | 100 |
| Comparative Example 2 | 102 | 89 |
| Comparative Example 3 | 103 | 79 |

### [Table 2]

**Table 2**

| | Discharging Capacity at Cycle 1 [%] | Resistance at Cycle 10 [%] |
|---|---|---|
| Example 4 | 118 | 33 |
| Example 9 | 117 | 36 |
| Comparative Example 4 | 100 | 100 |
| Comparative Example 5 | 101 | 92 |
| Comparative Example 6 | 105 | 78 |

### [Table 3]

**Table 3**

| | Discharging Capacity at Cycle 1 [%] | Resistance at Cycle 10 [%] |
|---|---|---|
| Example 5 | 114 | 38 |
| Example 10 | 116 | 37 |
| Comparative Example 7 | 100 | 100 |
| Comparative Example 8 | 102 | 87 |
| Comparative Example 9 | 105 | 78 |

As shown in Tables 1 to 3, all Examples had excellent discharge capacity and suppressed increase of internal resistance. In addition, it is found from the comparisons of Examples 1 to 3 to Examples 6 to 8, Example 4 to Example 9 and Example 5 to Example 10 that an embodiment using the Chemical Formula (1) as Component (B) and an embodiment using the Chemical Formula (2) as Component (B) showed equivalent results. The Examples showed an example in which the present invention was applied to a battery provided with a solid-state lithium-ion secondary battery using an inorganic solid electrolyte as an electrolyte, but the invention is not limited thereto. For example, materials having lithium-ion conductivity such as a polymer solid electrolyte consisting of an electrolyte and a polymer compound dissolving the electrolyte, and the like can be used. As the polymer which can be used, for example, an ether-based polymer such as polyethylene oxide, a poly(methacrylate)ester-based polymer, an acrylate-based polymer, and the like can be used alone, or a copolymer of the polymers in a molecule or a mixture of the polymers can be used.

### INDUSTRIAL APPLICABILITY

The positive electrode active material coating material according to the present embodiments can be suitably used in a secondary battery.

### [Explanation of Numerical Symbols]

- 1: positive electrode

- 2: negative electrode
- 3: separator
- 4: positive electrode can
- 5: negative electrode can
- 6: gasket
- 7: spacer
- 8: spring
- 11: cylindrical insulating tube
- 12: stainless steel jig
- 13: positive electrode-mixed material
- 14: solid electrolyte
- 15: indium foil
- 16: lithium foil

## Claims

1. A positive electrode active material coating material for coating a positive electrode active material **characterized by** comprising a compound composed of at least any one or more elements of an alkali metal, an alkaline-earth metal and Al, and F as Component (A), and comprising any one or more of compounds represented by Chemical Formula (1) and/or Chemical Formula (2) as Component (B): 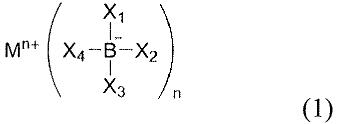 wherein,
the Mⁿ⁺ is an alkali metal ion or an alkaline-earth metal ion, and n represents the number of valency, and
the X₁ to X₄ represent a halogen atom, a hydrocarbon group or an alkoxy group having the number of carbon atoms of from 1 to 10, or a hydrocarbon group or an alkoxy group having the number of carbon atoms ranging from 1 to 10, which has at least any one of a halogen atom or an unsaturated bond, or
two groups of X₁ to X₄ are bound to each other to form a cyclic structure of -OOC-COO-, -OOCO-, -OOC-Y₁-COO-, -OOC-Y₂-O- or -O-Y₃-O-,
wherein the Y₁, Y₂ and Y₃ are a group having a linear or a cyclic structure, and represent a hydrocarbon group having the number of carbon atoms of from 1 to 10, or a hydrocarbon group having at least any one of a halogen atom, an unsaturated bond or a heteroatom,
provided that at least one of X₁ to X₄ is a fluorine atom; 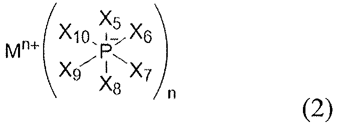
wherein,
the Mⁿ⁺ is an alkali metal ion or an alkaline-earth metal ion, and **n** represents the number of valency, and
the X₅ to X₁₀ represent a halogen atom, a hydrocarbon group or an alkoxy group having the number of carbon atoms of from 1 to 10, or a hydrocarbon group or an alkoxy group having the number of carbon atoms ranging from 1 to 10, which has at least any one of a halogen atom or an unsaturated bond, or
at least two groups of X₅ to X₁₀ are bound to each other to form a cyclic structure of -OOC-COO-, -OOCO-, -OOC-Y₁-COO-, -OOC-Y₂-O- or -O-Y₃-O-, wherein the Y₁, Y₂ and Y₃ each, independently, have a linear or a cyclic structure, and represent a hydrocarbon group having the number of carbon atoms of from 1 to 10, or a hydrocarbon group having at least any one of a halogen atom, an unsaturated bond or a heteroatom,
provided that at least one of X₅ to X₁₀ is a fluorine atom.

2. The positive electrode active material coating material according to claim 1, wherein the alkali metal of the Component (A) is any one or more of Li, K and Na.

3. The positive electrode active material coating material according to claim 1, wherein the alkali metal of the Component (A) is Li.

4. The positive electrode active material coating material according to claim 1, wherein the Component (A) comprises at least any one compound of LiF, AlF₃ and Li₃AlF₆.

5. The positive electrode active material coating material according to claim 1, wherein the alkali metal ion of the Component (B) is a lithium ion.

6. The positive electrode active material coating material according to claim 1, wherein the compound represented by the Chemical Formula (1) is **characterized by** comprising one or more compounds selected from the group consisting of lithium difluoro(oxalato)borate, sodium difluoro(oxalato)borate and potassium difluoro(oxalato)borate.

7. The positive electrode active material coating material according to claim 1, wherein the compound represented by the Chemical Formula (2) is **characterized by** comprising one or more compounds selected from the group consisting of lithium difluoro bis(oxalato)phosphate, sodium difluoro bis(oxalato)phosphate, potassium difluoro bis(oxalato)phosphate, lithium tetrafluoro(oxalato)phosphate, sodium tetrafluoro(oxalato)phosphate and potassium tetrafluoro(oxalato)phosphate.

8. The positive electrode active material coating material, wherein the content of the Component (B) is from 1% by mol to 70% by mol in the positive electrode active material coating material.

9. A positive electrode using a positive electrode active material coated with a positive electrode active material coating material as defined in claim 1, wherein the positive electrode active material comprises a transition metal oxide.

10. The positive electrode according to claim 9, wherein the transition metal oxide comprises LiCoO₂.

11. A positive electrode using a positive electrode active material coated with a positive electrode active material coating material as defined in claim 1, wherein the positive electrode active material comprises an oxide containing two transition metals or an oxide containing three transition metals.

12. The positive electrode according to claim 11, wherein the oxide containing two transition metals comprises LiNiₓ₂Mn_{y2}O_{z2}, wherein 0 < x2 < 2, 0 < y2 < 2, 2 < z2 ≤ 4, 1 ≤ x2 + y2 ≤ 2.

13. The positive electrode according to claim 11, wherein the oxide containing three transition metals comprises LiNiₓ₄Co_{y4}Mn_{z4}O₂, wherein 0 < x4 < 1, 0 < y4 < 1, 0 < z4 < 1, x4 + y4 + z4 = 1.

14. A secondary battery comprising a positive electrode as defined in any one of claims 9 to 13, an electrolyte solution and a negative electrode.

15. The secondary battery according to claim 14, wherein the secondary battery is a solid lithium-ion battery or a non-aqueous electrolyte solution-based lithium-ion battery.
